Europäisches Patentamt

(19) European Patent Office

Office européen des brevets

(11) Veröffentlichungsnummer: **0 249 144 B1**

# (12) EUROPÄISCHE PATENTSCHRIFT

(45) Veröffentlichungstag der Patentschrift:
06.02.91 Patentblatt 91/06

(51) Int. Cl.⁵: **H04N 3/23**

(21) Anmeldenummer: **87108060.2**

(22) Anmeldetag: **04.06.87**

---

(54) **Schaltungsanordnung zur Beseitigung von Geometrieverzerrungen.**

---

(30) Priorität: **11.06.86 DE 3619279**

(43) Veröffentlichungstag der Anmeldung:
**16.12.87 Patentblatt 87/51**

(45) Bekanntmachung des Hinweises auf die
Patenterteilung:
**06.02.91 Patentblatt 91/06**

(84) Benannte Vertragsstaaten:
**AT BE CH DE ES FR GB IT LI LU NL SE**

(56) Entgegenhaltungen:
**EP-A- 0 201 336**
**WO-A-86/00170**

(56) Entgegenhaltungen:
**TECHNISCHE MITTEILUNGEN
AEG-TELEFUNKEN, 1970, Nr. 5, Berlin.
ALFRED POLLAK, WOLFGANG REICHOW
"Aktive Kissenentzerrungsschaltung für die
110 -Farbbildröhre", Seiten 307-312
FUNKSCHAU, 1977, Heft 18, München.
WERNER RIECHMANN "Farbfernsehgerät mit
niedrigem Stromverbrauch", Seiten 832-834**

(73) Patentinhaber: **Deutsche Thomson-Brandt
GmbH
Hermann-Schwer-Strasse 3 Postfach 1307
D-7730 Villingen-Schwenningen (DE)**

(72) Erfinder: **Hartmann, Uwe
Tallardstrasse 15
D-7730 Villingen-Schwenningen (DE)**
Erfinder: **Ohnemus, Fritz
An der Hammerhalde 13
D-7730 Villingen-Schwenningen (DE)**

**Beschreibung**

Die Erfindung betrifft eine Schaltungsanordnung zur Erzeugung eines Korrekturstromes zur beseitigung von Geometrieverzerrungen bei der Wiedergabe eines bildes auf dem bildschirm einer Fernsehbildröhre mit Hilfe eines eine vertikalfrequente Sinusspannung erzeugenden Schwingkreises, der an den Eingang einer Modulatorstufe zur bildung eines doppeltzeilenfrequenten in Amplitude und Phase vertikalfrequent modulierten Rechtecksignals geschaltet ist, das einen Korrekturstrom für den vertikalen Ablenkstrom erzeugt, wobei eine Einrichtung vorgesehen ist, die den Korrekturstrom nur während bestimmter Zeilen des Fernsehbildes wirksam werden läßt.

Je größer der Ablenkwinkel in einer bildröhre ist, desto größer werden bekanntlich die Geometrieverzerrungen. Die Erfindung bezieht sich insbesondere auf die beseitigung von Geometrieverzerrungen in Nord-Süd-Richtung. Zur Korrektur benötigt man einen zusätzlichen zeilenfrequenten Strom in den Vertikalablenkwicklungen. Dieser Strom muß in seiner Amplitude zeilenfrequent parabelförmig moduliert sein, wobei diese parabelförmige Modulation während der ersten und letzten Zeilen des Fernsehbildes am größten ist und zur bildmitte in Nord-Süd-Richtung abnimmt. Hiermit lassen sich einfach Kissenverzerrungen in Nord-Süd-Richtung beseitigen.

Neue Röhrenentwicklungen besitzen einen Geometriefehler in Nord-Süd-Richtung, der sich aus einem zeilenfrequenten Kissenfehler sowie aus einem unter der bezeichnung "Möwenflügel" bekannt gewordenen Fehler mit doppelter Zeilenfrequenz zusammensetzt. Zur Kompensation dieses zweiten Fehlers ist es bekannt, eine Schaltungsanordnung vorzusehen, wie sie in der DE-PS 26 05 251 beschrieben ist.

In der PCT-Patentanmeldung WO 86/00 170 wird eine Schaltungsanordnung zur beseitigung des "gullwing"-Fehlers beschrieben. Diese Schaltung erzeugt einen Korrekturstrom, der vom oberen bildrand bis zur Mitte der oberen bildhälfte zu- und von dort bis zur bildmitte wieder bis zum Wert Null abnimmt, um von da ab bis zur Mitte der unteren bildhälfte wieder zuzunehmen, bis er bis zum unteren bildrand wieder zu Null abnimmt. Der Korrekturstrom ist demnach praktisch nur während der ersten Zeile, während der mittleren Zeile und während der letzten Zeile des bildes Null. Der Korrekturstrom ist also auch schon während der ersten und letzten Zeilen vorhanden und ebenso während der Zeilen um die bildmitte. Wenn aber zu diesen Zeiten keine "gullwing"-Fehler auftreten, können zusätzliche Geometrieverzerrungen entstehen.

Bei einer neu entwickelten bildröhre mit extrem flachen bildschirm zeigt sich ein gullwing-Fehler, der nur auf Teilbereiche der oberen und unteren bildschirmhälfte beschränkt ist, so daß etwa die ersten und letzten zwanzig Zeilen sowie die etwa dreißig Zeilen in der Mitte des Fernsehbildes frei von Fehlern oben beschriebener Art sind. Der Fehler verläuft etwa sinusförmig, so daß die bildfrequente Modulation des Korrekturstromes ebenfalls eine derartige Hüllkurve besitzen muß.

Der Erfindung liegt die Aufgabe zugrunde, den Korrekturstrom zur beseitigung der nur in Teilbereichen des bildes sich zeigende Verzerrungen zu erzeugen. Diese Aufgabe wird durch die im Patentanspruch angegebene Erfindung gelöst.

Nachstehend wird die Erfindung an einem Schaltungsbeispiel mit Hilfe der Zeichnung erläutert.

Figur 1 zeigt den zu beseitigenden Fehler eines verzerrten Fernsehbildes ;

Figur 2 zeigt den Verlauf des Korrekturstromes zur beseitigung des Fehlers ;

Figur 3 zeigt eine Schaltungsanordnung zur Erzeugung des Korreketurstromes nach Figur 2.

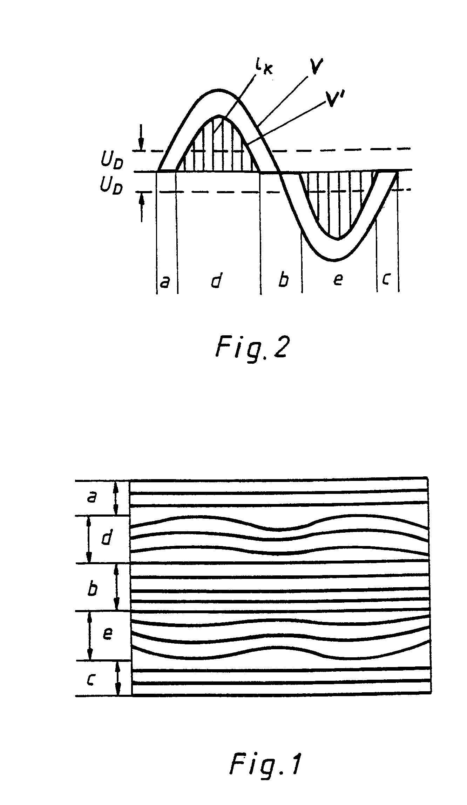

In Figur 1 ist der Verlauf des Fehlers gezeigt, der mit der angemeldeten Schaltungsanordnung beseitigt werden soll. Es handelt sich bei der Darstellung um ein waagrechtes Strichraster, auf das sich der Fehler in Nord-Süd-Richtung auswirkt. Bei der Darstellung nach Figur 1 ist vorausgesetzt, daß der Kissenfehler in Nord-Süd-Richtung bereits korrigiert ist. Es zeigt sich, daß in den bereichen a der ersten Zeilen, b der mittleren und c der letzten Zeilen des wiedergegebenen Fernsehbildes kein Fehler auftritt, während in den bereichen d und e in der oberen und unteren Hälfte des Fernsehbildes der Möwenflügel-Fehler auftritt. Deshalb muß ein Korrekturstrom erzeugt werden, der den Vertikalablenkspulen nur während der Dauer der gestörten Zeilen in den bereichen d und e zugeführt wird.

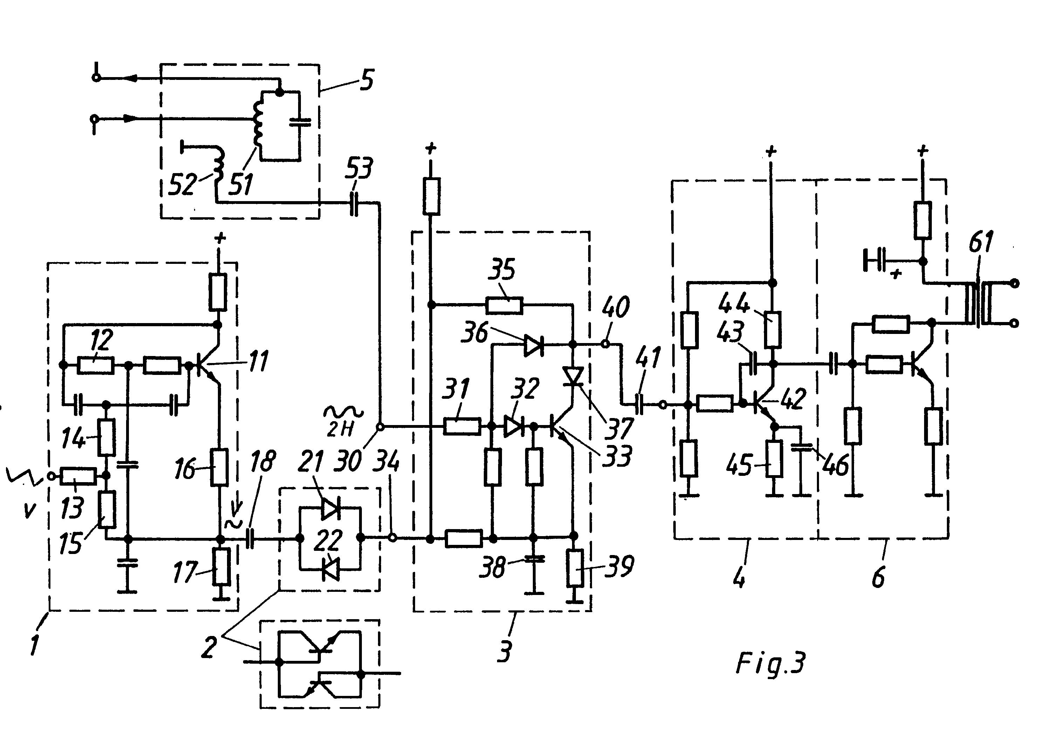

In Figur 2 ist der Korrekturstrom, der zur Beseitigung des Fehlers geeignet ist, mit ik gekennzeichnet. Dieser besteht aus durch die Straffur angedeuteten Impulsen doppelter Zeilenfrequenz, deren Amplitude bildfrequent sinusförmig moduliert ist. In den Bereichen a, b und c ist dieser Korrekturstrom Null. Wie dieser Korrekturstrom erzeugt wird, wird nachstehend mit Hilfe der Figur 3 erläutert.

Zunächst wird eine bildfrequente Sinusspannung V mit Hilfe einer Schwingschaltung 1 erzeugt, die durch die Zusammenschaltung des Transistors 11 mit einem Doppel-T-Filter 12 entsteht. Dazu wird die Schwingschaltung 1 mittels einer über den Widerstand 13 in den aus den Widerständen 14 und 15 bestehenden Querwiderstand des Doppel-T-Filters 12 zugeführten vertikalfrequenten Sägezahnspannung angestoßen. Die Verstärkung der auf bildfrequenz abgestimmten Schwingschaltung 1 ist durch den Emitterwiderstand 16 derart reduziert, daß keine Eigenschwingung entsteht. An dem Widerstand 17 ist eine bildfrequente sinusförmige Spannung abnehmbar. Über den Koppelkondensator 18 gelangt das Sinussignal über eine aus zwei antiparallel geschaltete Dioden 21 und 22 bestehende Stufe 2, deren Wirkung später erläutert wird, an einen Eingang 34 einer Modulatorstufe 3, die zur Erzeugung des Korrekturstromes dient. Mit der Modulatorstufe 3 werden doppeltzeilenfrequente in Amplitude und Phase bildfrequent modulierte Rechteckimpulse erzeugt. Dazu wird an den Anschluß 30 ein aus einer Stufe 5 entnommenes Signal doppelter Zeilenfrequenz gelegt. Die Stufe 5 ist in einem Fernsehempfänger bereits vorhanden und dient z.b. zur Tangenskorrektur. In die Stufe 5 wird der zeilenfrequente Ablenkstrom eingespeist, der auch durch Horizontalablenkspulen fließt, die nicht näher dargestellt sind. Der Kreis 51 ist auf die etwa doppelte Zeilenfrequenz abgestimmt. Die Signale mit dieser Frequenz werden über die Koppelspule 52 ausgekoppelt und über den Kondensator 53 an den Eingang 30 des Modulators 3 gelegt. Dieses Signal gelangt über einen Widerstand 31 und eine Diode 32 an die Basis eines Transistors 33, so daß dieser während der positiven Halbwelle der Signale in den leitenden Zustand gesteuert wird. Gleichzeitig wird über den Eingang 34 ein von Null ansteigendes bildfrequentes Sinussignal eingespeist, welches über den Widerstand 35 und die Diode 36 mit dem über den Widerstand 31 eingespeisten Signal zusammengeschaltet ist. Außerdem wird das bildfrequente Sinussignal über eine Diode 37 an den Kollektor des Transistors 33 angeschaltet. Der Emitter des Transistors 33 ist über einen Kondensator 38 mit dem Bezugspotential verbunden, welcher zusammen mit dem diesen parallel geschalteten Widerstand 39 ein Integrierglied bildet, welchem über den Anschluß 34 das bildfrequente Sinussignal zugeführt wird.

Das am Ausgang 40 abnehmbare in Amplitude und Phase bildfrequent modulierte Rechtecksignal entsteht auf nachfolgend beschriebene Weise. Die dem Anschluß 30 zugeführten Impulse doppelter Zeilenfrequenz schalten den Verbindungspunkt der beiden Dioden 32 und 36 während der positiven Halbwelle jeweils auf das am Kondensator 38 liegende Potential zuzüglich der Durchlaßspannung der Diode 32. Das Potential am Kondensator 38 stellt sich dabei automatisch auf die Mittellinie des bildfrequenten Sinussignals infolge der integrierenden Wirkung des Kondensators 38 mit dem Widerstand 39 ein. Während der ersten Hälfte der bildfrequenten Abtastperiode und der positiven Halbwelle der Signale mit doppelter Zeilenfrequenz ist die Diode 36 leitend, so daß das bildfrequente Signal auf das Potential des Verbindungspunktes der beiden Dioden 32 und 36 geklemmt wird. In der zweiten Hälfte der bildfrequenten Abtastperiode ist die Diode 36 gesperrt. Da aber der Transistor 33 während der positiven Halbwelle des Signals mit doppelter Zeilenfrequenz immer leitend ist, wird das bildfrequente Sinussignal über die Diode 37 auf das Potential des Emitters des Transistors 33 zuzüglich seiner Kollektor-Emitter-Restspannung sowie der Durchlaßspannung der Diode 37 geklemmt, so daß das gewünschte Signal am Anschluß 40 entsteht. Dieses Signal wird über den Kondensator 51 auf einen Miller-Integrator 4 gegeben, der aus dem Transistor 42, dem Kondensator 43 und den Widerständen 44 und 45 mit dem parallel geschalteten Kondensator 46 besteht. Der Miller-Integrator ist derart dimensioniert, daß nur die horizontalfrequenten Rechteckimpulse integriert werden, da das RC-Glied 45, 46 für bildfrequente Signalanteile eine große Gegenkopplung bildet.

Ein an den Miller-Integrator 4 angeschalteter Verstärker 6 addiert den Korrekturstrom, der über einen Übertrager 61 ausgekoppelt wird, zum Vertikalablenkstrom.

Durch die Einschaltung der Stufe 2 wird der Korrekturstrom während der gewünschten Zeiträume unterdrückt. Im Ausführungsbeispiel geschieht dies mit Hilfe der zwei antiparallel geschalteten Dioden 21 und 22. Wie Figur 2 zeigt, muß in beiden Richtungen jeweils erst die Durchlaßspannung UD überwunden werden, damit die Signale an den Eingang 34 gelangen können. Die bildfrequente Sinusspannung V am Widerstand 17 der Schwingschaltung 1 wird in eine modifizierte sinusförmige Hüllkurvenspannung V' mit dazwischen liegenden flachen Verläufen umgeformt, so daß der Korrekturstrom $i_k$ mit dieser Hüllkurvenspannung V' moduliert ist.

Es ist auch möglich, den Korrekturstrom in den Bereichen a, b und c dadurch zu unterdrücken, daß mit Hilfe eines elektronischen Schalters die der Schwingschaltung entnommene Sinusspannung in der Nähe ihrer Nulldurchgänge auf Null-Potential geklemmt wird.

Die Schwingschaltung kann auch als Sinusgenerator aufgebaut sein, der von dem Vertikal-Ablenksignal synchronisiert wird.

Die Stufe 2 kann auch auf andere Art aufgebaut sein, z.B. in der darunter angedeuteten Form von zwei als Dioden antiparallel geschalteten Transistoren.

## Ansprüche

1. Schaltungsanordnung zur Erzeugung eines Korrekturstromes zur Beseitigung von Geometrieverzerrungen bei der Wiedergabe eines Bildes auf dem Bildschirm einer Fernsehbildröhre mit Hilfe einer eine vertikalfrequente Sinusspannung erzeugenden Schwing-Schaltung (1), die an den Eingang einer Modulatorstufe (3) zur Bildung eines doppeltzeilenfrequenten in Amplitude und Phase vertikalfrequent modulierten Rechtecksignals geschaltet ist, das einen Korrekturstrom für den vertikalen Ablenkstrom erzeugt, wobei eine Einrichtung (2) vorgesehen ist, die den Korrekturstrom nur während bestimmter Zeilen des Fernsehbildes wirksam werden läßt, dadurch gekennzeichnet, daß die Einrichtung aus zwei antiparallelgeschaltete Dioden (21, 22) oder aus zwei als Dioden antiparallelgeschaltete Transistoren besteht, die zwischen den Ausgang der vertikalfrequenten Schwingschaltung (1) und den Eingang der Modulatorstufe (3) geschaltet sind.

## Claims

1. A circuit arrangement for producing a correction current for eliminating geometric distortion when reproducing a picture on the screen of a television tube with the aid of an oscillation circuit (1) producing a vertical frequency sine voltage, said circuit (1) being connected to the input of a modulator stage (3) for forming a twice line frequency square wave signal which is vertical frequency modulated in amplitude and phase, said signal producing a correction current for the vertical deflection current, in which a device (2) is provided, which allows the correction current to become effective only during certain lines of the television picture, characterised in that the device comprises two antiparallel connected diodes (21, 22) or two transistors connected antiparallel as diodes, which are connected between the output of the vertical frequency oscillation circuit (1) and the input of the modulator stage (3).

## Revendications

1. Circuit d'élaboration d'un courant de correction pour l'élimination des distorsions géométriques lors de l'affichage d'une image sur l'écran d'un tube cathodique de télévision à l'aide d'un circuit oscillant (1) qui produit une tension sinusoïdale à la fréquence d'images et qui est branché sur l'entrée d'un étage modulateur (3) élaborant un signal rectangulaire à la double fréquence de lignes, modulé en amplitude et en phase à la fréquence d'images, qui crée un courant de correction pour le courant de déviation verticale, un dispositif (2) étant prévu pour faire en sorte que le courant de correction n'agisse que pendant certaines lignes de l'image de télévision, caractérisé en ce que le dispositif est composé de deux diodes (21, 22) en montage antiparallèle ou de deux transistors en montage antiparallèle formant diodes, intercalés entre la sortie du circuit oscillant (1) et l'entrée de l'étage modulateur (3).

Fig.2

Fig.1

Fig.3

EP 0 249 144 B1